# EUROPEAN PATENT APPLICATION

(11) **EP 1 526 062 A2**
(43) Date of publication of application: **27.04.2005**
(21) Application number: 04256548.1
(22) Date of filing: 22.10.2004
(51) Int. Cl.: B62D 53/06

(54) **Split-chassis trailer**

(30) Priority: 24.10.2003 GB 0324796
(71) Applicant: Raven, Paul Anthony, Stowmarket, IP14 1QW (GB); Raven, Kevin William, Ipswich, IP6 0JH (GB)
(72) Inventor: Raven, Paul Anthony, Stowmarket, IP14 1QW (GB); Raven, Kevin William, Ipswich, IP6 0JH (GB)
(74) Representative: McLean, Robert Andreas

(57) **Abstract**

The invention relates to a split-chassis load carrying vehicle for carrying goods, commodities, materials, containers or other such loads that may need to be delivered to or collected from different locations, or be offloaded from or loaded on the vehicle at different times. The vehicle may be a non-articulated truck or an articulated flatbed or skeletal trailer. The vehicle has forward and rearward chassis sections that may be brought together and joined, or separated, particularly a forwards chassis section (4), a rearwards chassis section (2), said chassis sections extending along a longitudinal axis, and a bogie section (6) having road-running gear including a set of road-going wheels (11). The bogie section (6) is movable relative to the chassis sections (2,4) and securable to these sections by means of an axial securing mechanism (50,52;36,53) that lies entirely below the level of the longitudinal frame members (20-23). The forwards chassis section (4) and the rearwards chassis section (2) are releaseably joined to each other to form the vehicle (1) by means of an axial engagement mechanism (26,32,42) which when disengaged allows said chassis sections (2,4) to be separated. The arrangement is such that when the bogie section (6) is moved between the forwards and rearwards chassis section (2,4) a potion of the axial securing mechanism (52,53) in the bogie section (6) moves beneath the axial engagement mechanism (26,32,42).

## Description

### BACKGROUND

### a. Field of the Invention

The present invention relates to a vehicle for carrying goods, commodities, materials, containers or other such loads that may need to be delivered to or collected from different locations, or be offloaded from or loaded on the vehicle at different times. In particular the invention relates to a split-chassis load carrying vehicle, for example a non-articulated split-chassis truck or an articulated flatbed or skeletal split-chassis trailer, having forward and rearward chassis sections that may be brought together and joined, or separated.

### b. Related Art

When transporting goods, it is often not possible or desirable to load a truck or a trailer with goods going to one particular destination or being unloaded at one time. As a result, two such delivery vehicles may need to be used to complete the delivery, or one vehicle may have to be used with the limitation that the vehicle may be delayed by loading or unloading at an intermediate destination.

It is common in the field of containerised transport of goods to use a flatbed or a skeletal trailer having a rear sliding bogie section that allows the trailer to be extendible between two lengths, for example 6.1m (20 feet) and 12.2 m (40 feet). In one mode of usage, the length of the trailer is locked at either of these lengths for mounting of containers with these lengths. A 13.6 m (45 feet) container may also be carried on a 12.2 m trailer. Alternatively, the length of the trailer may be locked in the extended position to permit greater axle loading, according to the law. For example, a 6.1 m (20 feet) container above a certain weight may be required by law to be carried by a 12.2 m trailer in order to spread the axle loading.

The extension may be accomplished by having the set of wheels on a bogie which is itself fixed to a slider mechanism for slideably moving the bogie relative to the chassis section. Examples such extendible trailers are disclosed in patent documents GB 2 298 399 A and WO 03/011636 A1.

Extendible trailers allow a driver to load various types of ISO container configurations, namely 1 x 12.2 m (40 feet) container standard or "High Cube" height, 1 x 13.6 m (45 feet) container standard or "High Cube" height, 1 x 9.1 m (30 feet) container, 1 x 6.1 m (20 feet) "Heavy" (at least 24 tonne) container standard or "High Cube" height placed in the centre of the trailer for axle loading laws and 2 x 6.1 m (20 feet) containers standard or "High Cube" height. The containers are collected from the docks and given to the operators for delivery. When the trailer is extended, it is able to carry all of the above container sizes, however the "Heavy" 6.1 m container must be centrally mounted in order to comply with axle loading laws. In the extended position, the rear "Heavy" 6.1 m container doors cannot be accessed for unloading without retracting the trailer into the closed position. To close the trailer the driver can operate the locking mechanism either from his cab or at controls located outside on the trailer to unlock the section, and then with the rear wheels locked, reverse the cab into its retracted position, closing the trailer fully allowing the container doors to become flush with the rear of the trailer for off-loading.

Due to nature of the work the haulier does not know in advance which type of container he may have to carry for the next delivery. Although extendible trailers provide numerous advantages over non-extendible trailers, they do not provide a complete solution to the problems of delays from loading or unloading at intermediate delivery or collection locations.

It has therefore been proposed to use a split-chassis trailer, such as that disclosed in patent document EP 0 649 772 A1. This discloses a trailer having a forwards chassis section and a rearwards chassis section each of which is capable of carrying a 6.1 m container and which may be joined together or separated as required. When joined together the sections may carry one 12.2 m container. Each section has a full set of wheels so that the rearward section may be dropped off or collected from a location, thus minimizing delays from loading or unloading at intermediate locations. When the rearward section is to be separated from the forwards section, a forwards set of wheels on air suspension is dropped to support the forwards section. When the rearward section is joined to the forward section, the forwards set of wheels is raised to reduce drag and tyre wear.

A number of limitations have been noted with this type of split-chassis trailer. First, there is the need for additional road-running gear and an associated set of road-going wheels in the forwards chassis section. Although this adds to cost, the most significant limitation is the additional weight which limits the load that such a trailer may legally carry on the public highway in the United Kingdom and in continental Europe.

Furthermore, this type of split-chassis trailer is not able to carry all container configurations, loaded and unloaded, legally in compliance with both UK and continental European axle and height laws. The UK and continental European road haulage industry standard generally insists, due to cost and breakdown availability, that chassis are operated on super single 385 x 65 x R22.5 tyre size, rather than more expensive lower diameter tyres. This has split the UK and Continental European trailer manufactures into producing various types of the skeletal sliding bogie trailers and split-chassis trailers. In continental Europe there is a bridge height law setting a maximum clearance height of 4 m. As a result, the Continental European market requires what is known as a "Goose Neck" front to the trailer allowing a 13.6 m or 12.2 m (45 feet or 40 feet) "High Cube" container to sit lower on the chassis beams, thus reducing the container height by around 120 mm to 160 mm in order to get the overall height of the loaded container underneath the 4 m bridge clearance height. To comply with current Continental European laws and regulations, Continental European manufactures build sliding skeletal trailers with axle weight configurations that would not meet current British axle weight laws. The UK does not allow such low bridge heights on main routes, so it is not as beneficial to have a "Goose Neck" front to the trailer. Consequently, trailers for use in the UK are much cheaper to produce, and a "High Cube" container can be carried sitting on top of the trailer chassis as opposed to within the neck of a trailer chassis.

Because of the excess weight from the additional set of road going wheels, which for a commercially viable trailer need to be of the standard size, the trailer disclosed in EP 0 649 772 A1 could not in practice carry a "High Cube" container on continental European roads or certain types of "Heavy" container on UK roads.

Another type of split chassis trailer which cannot carry a variety of different containers is disclosed in US 3,102,738. This trailer has a relatively weak coupling between forwards and rearwards chassis sections and is therefore not suited to carrying "Heavy" containers. Furthermore, the particular arrangement of joining trailer sections disclosed in this document requires that there be a gap between two mounted containers, which increases the length of the trailer and precludes the mounting of single longer containers on the trailer.

There is therefore a need for a UK/European split-chassis load carrying vehicle, and particularly a split-chassis trailer, that provides a greater legal load carrying capacity and allows all container configurations, including "High Cube" containers. Such a trailer should ideally comply with all current axle weight laws including relevant bridge height legislation on the super single 385 x 65 x R22.5 tyre size or equivalent, which is the industry standard low cost tyre specification.

### SUMMARY OF THE INVENTION

It is therefore an object of the present invention to provide a more convenient and useful split-chassis load carrying vehicle.

According to the invention, there is provided a split-chassis load carrying vehicle, comprising a forwards chassis section, a rearwards chassis section, said chassis sections extending along a longitudinal axis of the vehicle, and a bogie section having road-running gear including a set of road-going wheels, wherein:
- the bogie section is relatively movable with respect to the forwards and rearwards chassis sections between a forwards position beneath the forwards chassis section and a rearwards location beneath the rearwards chassis section at which positions the bogie section may be secured to either the forwards chassis section or the rearwards chassis section by means of a securing mechanism;
- the forwards chassis section and the rearwards chassis section are releaseably joined to each other to form the vehicle by means of an axial engagement mechanism which when disengaged allows said chassis sections to be separated;
- the forwards chassis section and the rearwards chassis section each have pair longitudinal frame members that extend on opposite sides of the longitudinal axis of the vehicle, said frame members being longitudinally aligned in pairs on opposite sides of said longitudinal axis of the vehicle when the forwards and rearwards chassis sections are joined to each other;
characterised in that
- the securing mechanism is an axial securing mechanism, said securing mechanism lying entirely below the level of the longitudinal frame members of both the forwards chassis section and the rearwards chassis section, the arrangement being such that when the bogie section is moved between the forwards and rearwards positions a portion of the securing mechanism in the bogie section moves beneath the engagement mechanism.

The provision of the securing mechanism at such a low location in the vehicle provides a number of benefits. First, the connection between the bogie section and forwards or rearwards section will be at a level closer to that of the wheels and axles which makes the bogie more securely attached to the sections when forces are imparted by the wheel, especially during braking. Second, because the securing mechanism is lowered, the engagement mechanism can also be lower that it would otherwise have to be, which provides increased strength between the forwards and rearwards sections against downward buckling when the sections are heavily loaded.

Also according to the invention, there is provided a split-chassis load carrying vehicle, comprising a forwards chassis section, a rearwards chassis section, said chassis sections extending along a longitudinal axis of the vehicle, and a bogie section having road-running gear including a set of road-going wheels, wherein:
- the bogie section is relatively movable with respect to the forwards and rearwards chassis sections between a forwards position beneath the forwards chassis section and a rearwards location beneath the rearwards chassis section at which positions the bogie section may be secured to either the forwards chassis section or the rearwards chassis section by means of an axial securing mechanism;
- the forwards chassis section and the rearwards chassis section are releaseably joined to each other to form the vehicle by means of an axial engagement mechanism which when disengaged allows said chassis sections to be separated;
- the axial engagement mechanism comprises an axially extending projection that projects forwards from the rearwards chassis section and that engages with a complementary feature on the forwards chassis section as the two sections are brought together to be joined;
characterised in that
- the projection has a downwardly extending king pin for engagement with a fifth-wheel coupling mechanism of a tractor unit when the forwards section is not joined to the rearwards section.

In the present application, the term "axial" in "axial engagement mechanism", "axial securing mechanism" and "axial mechanism", means a mechanism that lies on or about a vertical plane through a longitudinal central axis between the paired longitudinal frame members of the forwards and rearwards chassis sections. Because these mechanisms are separate from the pair of longitudinal frame members in the forwards and rearwards chassis sections, these mechanisms do not engage with these longitudinal frame members when the sections are joined or when the bogie section is moved between forwards and rearwards chassis section.

Preferably, the axial engagement mechanism is located directly on or is centered about, a longitudinal axial plane that bisects the chassis sections. Similarly, the axial securing mechanism is preferably located directly on or is centered about, a longitudinal axial plane that bisects the chassis sections.

The king pin on the rearwards section may also be part of the axial engagement mechanism which joins the forwards and rearwards chassis sections together. Thus the king pin can serve two functions, namely joining of the rearwards and forwards section together, and joining of the rearwards section to a tractor unit.

Similarly, the forwards section may also have a downwardly extending king pin for engagement with a fifth-wheel coupling mechanism of a tractor unit.

A number of important advantages stem from the combination and arrangement of the axial engagement mechanism between the forwards and rearwards chassis sections and the axial locking mechanism between the bogie section on the one hand and the forwards and rearwards chassis sections on the other hand. For example, since the centre of mass of the chassis sections will normally lie close to the longitudinal axis of the vehicle, the axial location of the engagement mechanism means that any forces transmitted between the sections when the vehicle is moving on the road will tend to pass through or relatively close by the engagement mechanism, thus helping to minimise any twisting forces on the engagement mechanism.

Furthermore, when the engagement mechanism is axial, then it is easier for an operator of the trailer to align the portions of the engagement mechanism when joining the chassis sections together. This is because an axial engagement mechanism can be designed to allow for some degree of lateral misalignment and/or skew misalignment between the longitudinal axes of the chassis sections as these are brought together.

In general, it is also better to have such mechanisms provided at an axial location rather than, for example, closer to the sides of the vehicle, such as laterally extending pins between overlapping longitudinal frame members, since an axial location is inherently more sheltered from interference and accidental damage. There is also a safety benefit in that an axial location is removed from personnel who may be beside the trailer when the mechanisms are operated.

An axial location for the engagement mechanism and the securing mechanism also helps to avoid conflict with those parts of the trailer connected to or near the vehicle body or longitudinal frame members, such as drop-down landing gear, any fixed wheels and the wheels of the sliding bogie section.

The securing mechanism may comprise a clasp mechanism in the bogie section that engages with a downwardly extending pin in the forwards chassis section and/or a downwardly extending pin in the rearwards chassis section as the bogie section is secured to the respective section.

Preferably, the downwardly extending pins in the forwards and rearwards chassis sections are non-moveably affixed to the respective section.

The securing mechanism may comprise a pair of clasps on the bogie section and a pair of downwardly extending pins, one of said pins being on the forwards chassis section and the other of said pins being on the rearwards chassis section, the arrangement being such that as the bogie section moves between said chassis sections one of the pins is released by and moves away from one of said clasps and the other of said pins moves towards and enters the other of said clasps.

The pair of clasps may then each have an entrance for receiving a respective pin, the entrances being arranged to face in opposite longitudinal directions, for example along the longitudinal axis of the vehicle.

Preferably, the axial engagement mechanism comprises an axially extending projection on one chassis section that engages with a complementary feature on the other chassis section as the two sections are brought together to be joined. The axially extending projection then lies partially beneath the level of the longitudinal frame members of both the forwards chassis section and the rearwards chassis section. This provides the benefit of allowing the join between the forwards and rearwards sections to be lowered, which provides increased strength against downward buckling of the two sections when these are heavily loaded.

In preferred embodiments of the invention, the bogie section has a pair of longitudinal frame members. The frame members may be beams, rails or any other longitudinally extending feature that permits the bogie section to slide relative to the forwards and rearwards chassis section. These frame members are longitudinally aligned on opposite sides of a longitudinal axis of the section to which the bogie section is secured. The securing mechanism then lies entirely below the level of the longitudinal frame members of the bogie section.

In preferred embodiments of the invention, the projection is a forwards projection on the rearwards chassis section, and the complementary feature is a matching recess on the forwards chassis section. The recess may be a sleeve with continuous walls, but preferably has discontinuous engagement surfaces so as to help save weight.

Also in preferred embodiments, the engagement mechanism extends in a volume beneath a support surface such as container mounts or a load-bearing floor of the vehicle for carrying a load.

The axial engagement mechanism may comprise a locking mechanism, such as a pin on one section that engages with a clasp on the other section when said sections are locked together.

The securing mechanism and the engagement mechanism may each comprise at least one pin on one of the sections and at least corresponding one clasp on the other of the sections for receiving the pin. The at least one clasp is then provided on the bogie section and/or the forwards chassis section and the rearwards chassis section not having any such clasp(s) when said chassis sections are separated and with the bogie section having been moved beneath the forwards chassis section.

Therefore in a preferred embodiment of the invention, when the forward chassis section is disengaged from the rearward chassis section, only the forward chassis section has any clasps, and the rearward chassis section has only pins.

In a first embodiment of the invention, the vehicle is a flatbed trailer.

In a second embodiment of the invention, the vehicle is a skeletal trailer for carrying containerised loads. In this case, the support members for supporting a containerised load may be provided on substantially parallel elongate frame members of the forwards chassis section and/or the rearwards chassis section.

In general the vehicle may have at least one drop-down support for supporting the rearward chassis section when the bogie section is moved to the forwards chassis section and when the rearwards section is separated from the forwards chassis section.

The forwards chassis section is formed utilising a forwards pair of substantially parallel elongate frame members that extend on opposite sides of the longitudinal axis of the vehicle.

Similarly, the rearwards chassis section is formed utilising a rearwards pair of substantially parallel elongate frame members that extend on opposite sides of the longitudinal axis of the vehicle.

The longitudinal alignment of forwards and rearwards pairs of longitudinal frame members when joined permits the bogie section to slide on said aligned longitudinal frame members as the bogie section moves between the forwards chassis section and rearwards chassis section.

In preferred embodiments of the invention, the engagement mechanism extends downwardly beneath a load carrying level of the vehicle into a space between the aligned longitudinal frame members. The bogie section then has one or more transverse frame members that extend between the longitudinal frame members and which are configured with a lowered profile in a central portion of the transverse member(s) as compared with laterally adjacent portions so as to allow passage of the bogie section beneath the downwardly extending engagement mechanism. The securing mechanism then lies at or below the level of the central portion of the transverse member(s).

Preferably, the bogie section partially overlaps in a longitudinal direction both the forwards section and the rearwards section when sections are joined together and when the bogie section is secured to the rearwards section. This provides increased strength in the arrangement, helps to ensure that the two sections remain aligned and provides for smoother sliding of the bogie section from the rearwards to the forwards sections than would otherwise be the case if the bogie section did not overlap partially the forwards section when secured to the rearwards section.

The vehicle may also comprise an automatic control system for controlling the separation and joining of the forwards and rearwards chassis sections. For example, when the rearwards chassis section is to be separated from the forwards chassis section, the control system being arranged to:
a) apply a brake to the wheels of the bogie section;
b) release the securing mechanism to disengage the bogie section from the rearwards chassis section;
c) permit the vehicle to move in a reverse direction with the bogie section remaining stationary until the securing mechanism engages with the forwards chassis section; and
d) release the engagement mechanism after the bogie section has been supported by drop down legs on the bogie section.

Also according to the invention, there is provided a vehicle for carrying a load, comprising a tractor unit in combination with a split-chassis load carrying vehicle, said split-chassis load carrying vehicle being according to the invention.

The invention further provides a rearwards chassis section for connection to a forwards chassis section to form a split-chassis vehicle, said rearwards chassis section comprising:
- a portion of an axial securing mechanism for securing a bogie section to the rearwards chassis section, the rearwards chassis section comprising additionally means by which a bogie section may move forwards of said axial securing mechanism when the bogie section is to be moved from the rearwards chassis section to a forwards chassis section joined to the rearwards chassis section;
- a portion of an axial engaging mechanism by which the rearwards chassis section may be releaseably engaged with a forwards chassis section to form the split-chassis vehicle; wherein
- said portion of the axial securing mechanism is at a level below the level of said portion of the axial engaging mechanism.

The invention additionally provides a forwards chassis section for connection to a rearwards chassis section to form a split-chassis vehicle, said forwards chassis section comprising:
- a bogie section having road-running gear including a set of road-going wheels, the bogie section being engaged to the forwards chassis section by means of an axial securing mechanism;
- a portion of an axial engaging mechanism by which the forwards chassis section may be releaseably engaged with a rearwards chassis section to form the split-chassis vehicle; wherein
- the bogie section is movable in a longitudinal direction with respect to the forwards chassis section towards a rearwards chassis section when the securing mechanism is released; and
- a portion of the axial securing mechanism in the bogie section moves beneath said portion of the axial engagement mechanism in the forwards chassis section when the bogie section moves towards a rearwards chassis section joined to the forwards bogie section.

Also described herein is a method of forming a split-chassis load carrying vehicle, said vehicle comprising a forwards chassis section, a rearwards chassis section, said chassis sections extending along a longitudinal axis of the vehicle, a bogie section releaseably secured to the forwards chassis section by means of an axial securing mechanism and having road-running gear including a set of road-going wheels, and an axial engagement mechanism for releaseably engaging said chassis sections together, the method comprising the steps of:
i) backing the forwards chassis section towards the rearwards chassis section to make the engagement mechanism engage said chassis section together and thereby join said chassis sections together;
ii) braking the wheels of the bogie section and releasing the securing mechanism to free the bogie section for relative sliding movement with respect to said joined chassis sections;
iii) moving said joined chassis sections forwards with the bogie section stationary until the bogie section is secured to the rearwards chassis section by means of the axial securing mechanism;
wherein the arrangement is such that when the bogie section is moved from the forwards chassis section to the rearwards chassis section a portion of the axial securing mechanism in the bogie section moves beneath the axial engagement mechanism.

### BRIEF DESCRIPTION OF THE DRAWINGS

The invention will now be further described, by way of example only, with reference to the accompanying drawings, in which:
Figure 1 is a plan view from above of a rearwards chassis section of a split-chassis load carrying vehicle according to a first preferred embodiment of the invention, having a flatbed floor for supporting a load, a fixed bogie with a set of wheels, and front and rear pairs of drop-down supports;
Figure 2 is a side view of the rearwards chassis section of Figure 1;
Figure 3 is a perspective view from above of the rearwards chassis section of Figure 1;
Figure 4 is rear view of the rearwards chassis section of Figure 1;
Figure 5 is a plan view from above of a forwards chassis section of a split-chassis load carrying vehicle according to a first preferred embodiment of the invention, having a flatbed floor for supporting a load, a movable bogie section with a set of wheels, and a front pair of drop-down supports, the forwards chassis section being suitable for joining to the rearwards chassis section of Figure 1 to form a split-chassis load carrying vehicle;
Figure 6 is a cross-section view through the forwards chassis section, taken along line VI-VI of Figure 5;
Figure 7 is a side view of the forwards chassis section of Figure 5;
Figure 8 is a perspective view from above of the forwards chassis section of Figure 5;
Figure 9 is a perspective view from below of the forwards chassis section of Figure 5;
Figure 10 is rear view of the forwards chassis section of Figure 5;
Figure 11 is a plan view from above of the rearwards and forwards chassis sections of Figures 1 and 5 when joined together to form a split-chassis load carrying vehicle, here a flatbed trailer;
Figure 12 is a cross-section view through the split-chassis trailer, taken along line XII-XII of Figure 11, with the movable bogie section moved to be beneath the rearwards chassis section;
Figure 13 is a side view of the split-chassis trailer of Figure 11;
Figure 14 is a perspective view from above of the split-chassis trailer of Figure 11;
Figure 15 is rear view of the split-chassis trailer of Figure 11;
Figure 16 is a perspective view from above of the movable bogie section;
Figure 17 is a side view of the movable bogie section of Figure 16;
Figure 18 is a rear view of the movable bogie section of Figure 16;
Figure 19 is a plan view from above of the movable bogie section of Figure 16;
Figure 20 is a plan view from above of a rearwards chassis section of a split-chassis load carrying vehicle according to a second preferred embodiment of the invention, having a skeletal frame for supporting an ISO container, a fixed bogie with a set of wheels, and front and rear pairs of drop-down supports;
Figure 21 is a side view of the rearwards chassis section of Figure 20;
Figure 22 is a perspective view from above of the rearwards chassis section of Figure 20;
Figure 23 is a plan view from above of a forwards chassis section of a split-chassis load carrying vehicle according to a second preferred embodiment of the invention, having a skeletal frame for supporting an ISO container, a movable bogie section with a set of wheels, and a front pair of drop-down supports, the forwards chassis section being suitable for joining to the rearwards chassis section of Figure 20 to form a split-chassis load carrying vehicle;
Figure 24 is a side view of the forwards chassis section of Figure 23;
Figure 25 is rear view of the forwards chassis section of Figure 23;
Figure 26 is a perspective view from above of the forwards chassis section of Figure 23;
Figure 27 is a perspective view from above of the rearwards and forwards chassis sections of Figures 20 and 23 when joined together to form a split-chassis load carrying vehicle, here a skeletal trailer having retractable mounting points for securing one or two ISO containers on the trailer, the mounting points here being retracted;
Figure 28 is a perspective view similar to that of Figure 27, showing the trailer with four pairs of mounting points being extended for securing two 6.1 m ISO containers on the trailer;
Figure 29 is a plan view from above of the split-chassis trailer of Figure 28;
Figure 30 is a cross-section view through the split-chassis trailer, taken along line XXX-XXX of Figure 29;
Figure 31 is a side view of the split-chassis trailer of Figure 29;
Figure 32 is a plan view from above of the split-chassis trailer of Figure 27;
Figure 33 is rear view of the split-chassis trailer of Figure 29;
Figure 34 is a plan view from above of a rearwards chassis section of a split-chassis load carrying vehicle according to a third preferred embodiment of the invention, having a skeletal frame for supporting an ISO container, a fixed bogie with a set of wheels, and front and rear pairs of drop-down supports;
Figure 35 is a is a cross-section view through the rearwards chassis section, taken along line XXXV-XXXV of Figure 34;
Figure 36 is a side view of the rearwards chassis section of Figure 34;
Figure 37 is a perspective view from above of the rearwards chassis section of Figure 34;
Figure 38 is a rear view of the rearwards chassis section of Figure 34;
Figure 39 is a side view of the rearwards chassis section of Figure 34 showing how this may be joined to a fifth-wheel of a tractor unit by means of a king pin that extends downwardly from an axial forwards projection of the rearwards chassis section;
Figure 40 is a plan view from above of a forwards chassis section of a split-chassis load carrying vehicle according to a third preferred embodiment of the invention, having a skeletal frame for supporting an ISO container, a movable bogie section with a set of wheels, and a front pair of drop-down supports, the forwards chassis section being suitable for joining to the rearwards chassis section of Figure 34 to form a split-chassis load carrying vehicle;
Figure 41 is a is a cross-section view through the forwards chassis section, taken along line XLI-XLI of Figure 40;
Figure 42 is a side view of the forwards chassis section of Figure 40;
Figure 43 is a perspective view from above of the forwards chassis section of Figure 40;
Figure 44 is rear view of the forwards chassis section of Figure 40;
Figure 45 is a side view of the forwards chassis section of Figure 40 showing how this may be joined to a fifth-wheel of a tractor unit by means of a king pin that extends downwardly from a front portion of the forwards chassis section;
Figure 46 is a plan view from above of the rearwards and forwards chassis sections of Figures 34 and 40 when joined together to form a split-chassis load carrying vehicle, here a skeletal trailer having fixed mounting points for securing one or two ISO containers on the trailer;
Figure 47 is a cross-section view through the split-chassis trailer, taken along line XLVII-XLVII of Figure 46;
Figure 48 is a side view of the split-chassis trailer of Figure 46;
Figure 49 is a perspective view from above of the split-chassis trailer of Figure 46;
Figure 50 is rear view of the split-chassis trailer of Figure 46;
Figure 51 is a side view of the split-chassis trailer of Figure 46 showing how this may be joined to the fifth-wheel of the tractor unit by means of the king pin in the front portion of the forwards chassis section;

### DETAILED DESCRIPTION

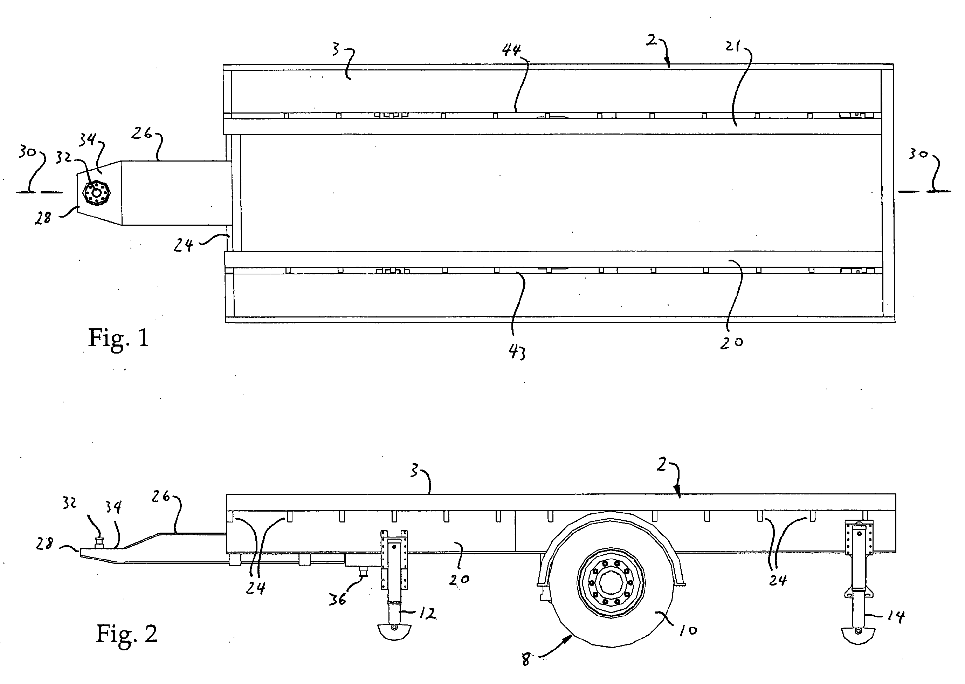

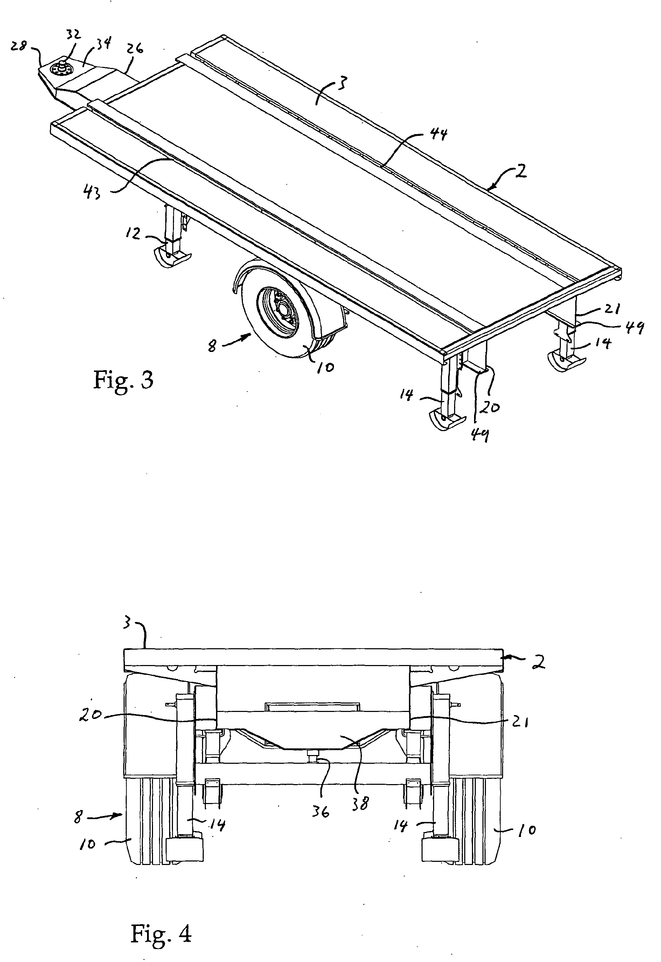

Reference is made first to Figures 1 to 4, which show various views of an elongate rearwards chassis section 2 for a split-chassis load carrying vehicle. The rearwards chassis section 2 has a flatbed floor 3 for supporting a load, a fixed bogie 8 with running gear including a set of wheels 10, and front and rear pairs 12,14 of drop-down supports. The running gear, which is fixed to the rest of the rearwards chassis section 2, is conventional and so will not be further described.

The rearwards chassis section 2 has a pair of parallel longitudinal frame members 20,21 in the form of steel C-beams or I-beams that extend nearly the full length of the chassis section 2. The frame members 20,21 have a laterally outwardly directed C-form. The frame members 20,21 are supported by the fixed bogie 8 and drop-down supports 12,14, and in turn support the load-bearing floor 3. The rearward chassis section 2 also has a number of transverse frame members 24,38 that extend between or project laterally outwards from the longitudinal frame members 20,21.

A male portion 26 of an engagement mechanism extends forwards of the longitudinal frame members 20,21 centered on a longitudinal axis 30 of the rearwards chassis section 2. This rearwards portion 26 of the engagement mechanism has a tapering tip 28. A fixed pin 32 extends upwards from an upper surface 34 of the tip 28 centered on the longitudinal axis 30. The functioning of the engagement means will be further explained below.

The rearwards chassis section 2 also has a downwards extending pin 36 which, as will also be explained below, serves as a portion of a securing mechanism to secure a movable bogie to the rearwards chassis section 2. The pin 36 extends downwardly from a transverse frame member 38 that extends between the longitudinal frame members 20,21. Like the upward extending pin 32, the downward extending pin 36 is also centered on the longitudinal axis 30. The central axial arrangement of the components 26,27,32 of the engagement mechanism helps to balance forces on these components both during connection and disconnection of the chassis sections 2,4 and also during operation on the road of the vehicle. The engagement mechanism is therefore referred to herein as an axial engagement mechanism.

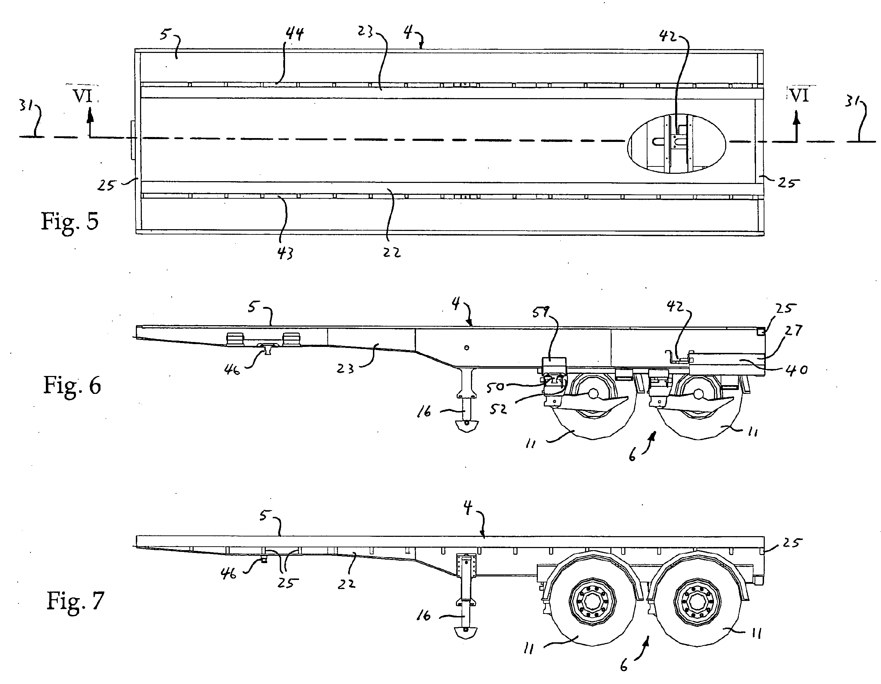

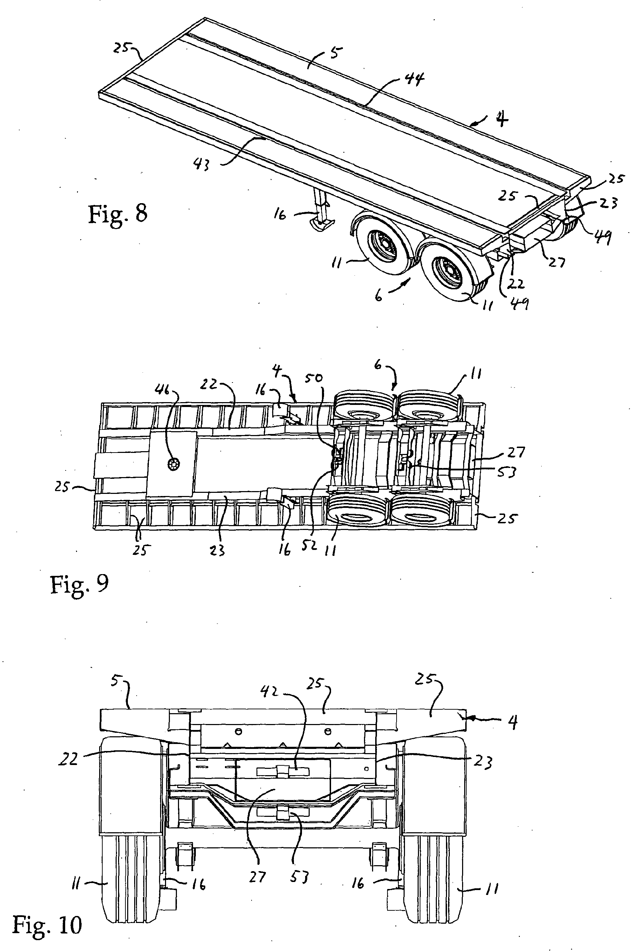

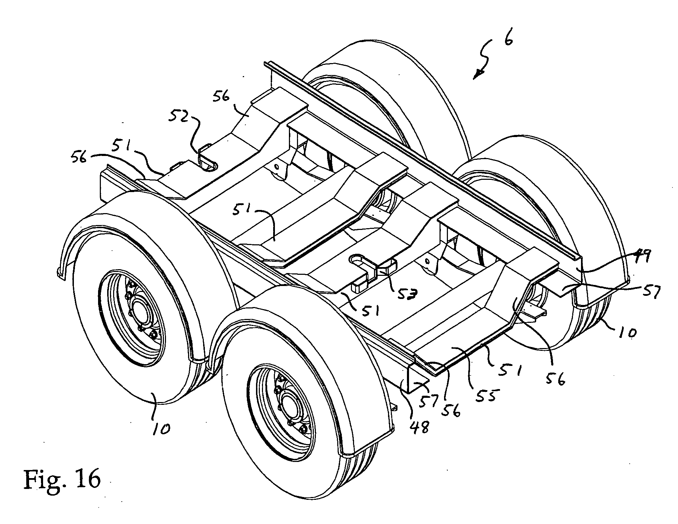

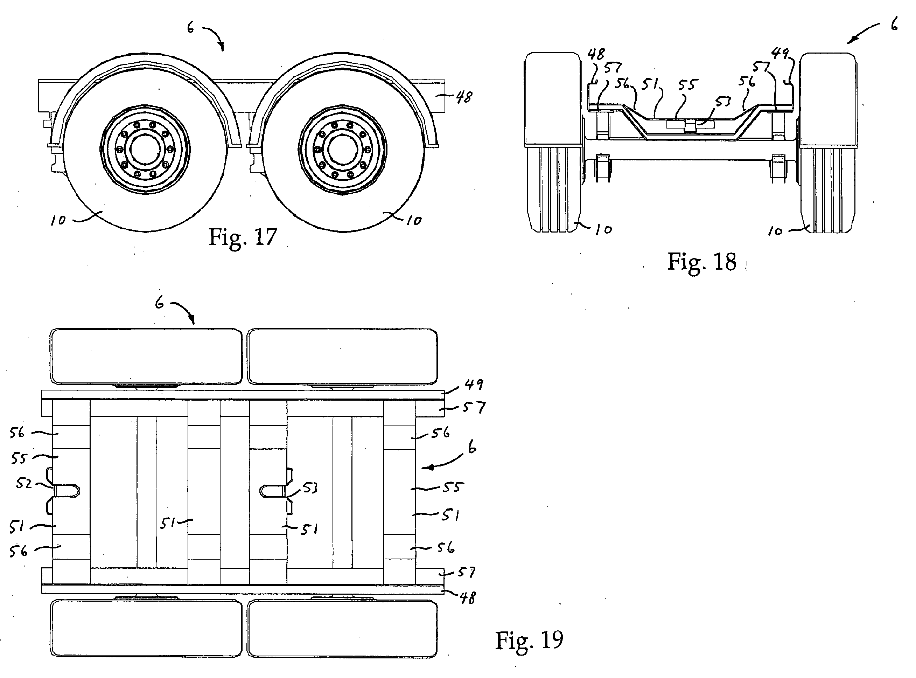

Reference is now made also to Figures 5 to 10, which show various views of an elongate forwards chassis section 4 for a split-chassis load carrying vehicle. The rearwards chassis section 2 has a flatbed floor 5 for supporting a load, a movable bogie section 6 with running gear including a set of wheels 11, and a front pair 16 of drop-down supports. Some of the running gear such as axels and air suspension, is conventional and so will not be further described. Parts of the running gear necessary for the movement and securing of the bogie section 6 to the rearwards and forwards chassis sections 2,4 are shown in more detail in Figures 16 to 19, and will be explained in detail below.

The forwards chassis section 4 has a pair of parallel longitudinal frame members 22,23 in the form of steel I-beams or C-beams that extend the full length of the chassis section 4. The forwards frame members 22,23 have the same C-form cross-section as the rearwards frame members 20,21. The frame members 22,23 are supported by the movable bogie section 6 and front drop-down supports 16, and in turn support the load-bearing floor 5. The forwards chassis section 4 also has a number of transverse frame members 25 that extend between or project laterally outwards from the longitudinal frame members 22,23.

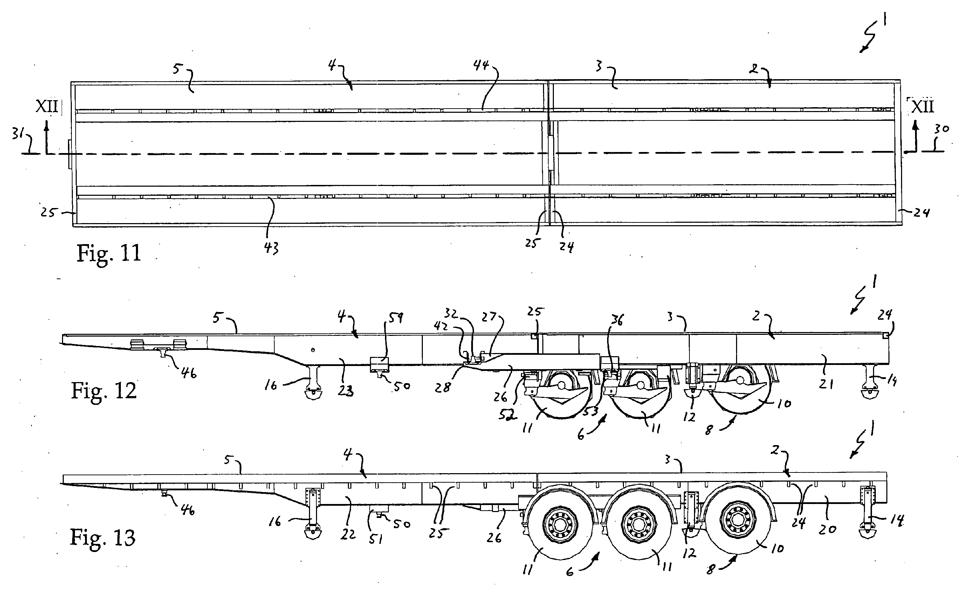

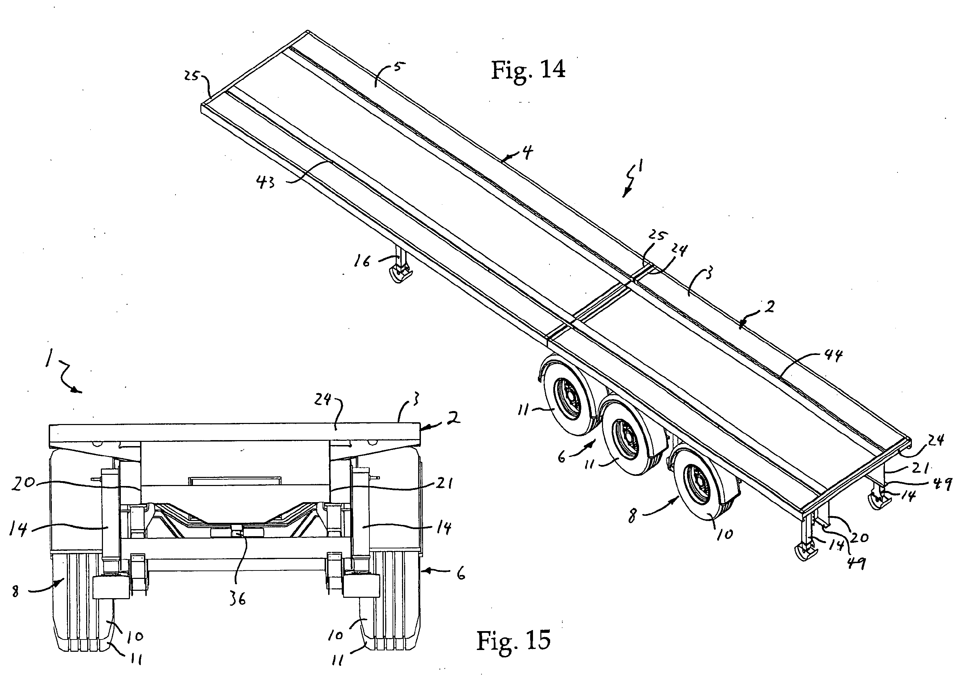

The forwards chassis section 4 has a female portion 27 of the engagement mechanism by which the forwards chassis section 4 may be removably joined to the rearwards chassis section 2, as shown in Figures 11 to 15. This forwards portion 27 of the engagement mechanism is centered on a longitudinal axis 31 of the forwards chassis section 4, and is in the form of a receptacle having some partially open sides 40 that lead towards a fifth-wheel type clasp mechanism 42, shown most clearly in a cut-away view in Figure 5. When the forwards chassis section 4 is rolled towards the rearwards chassis section 2, the rearwards portion 26 of the engagement mechanism enters the forwards portion 27. The fit is such that the upwards pin 32 is guided into the clasp 42 which automatically engages with the pin 32 to lock and secure the forwards section 4 to the rearwards section 2, and so form a split-chassis load carrying vehicle 1.

The rearwards and forwards floors 3,5 then provide a continuous loading surface. Optionally, the surface 3,5 has as shown in the drawings a pair of parallel grooves 43,44 that run alongside and laterally outwards from upper surfaces of the longitudinal I-beam frame members 20,21;22,23. The groves may then serve as a track for a crane (not shown) that may run the full length of the surface 3,5 for loading and unloading the vehicle.

As shown most clearly in Figures 12 and 13, the split-chassis vehicle 1 has towards the front of the forwards chassis section 4 a downwardly extending king pin 46 for connection to a fifth-wheel of a tractor unit (not shown). The vehicle 1 therefore serves as a flatbed trailer.

As shown in Figure 16 to 19, the movable bogie section 6 has a pair of longitudinal frame members 48,49 each of which has a laterally inwardly directed C-form. A number of transverse frame members 51 extends between the longitudinal frame members 48,49, each of which has a profile in the transverse direction that matches the profile of transverse supports for the engagement mechanism 26,32;27,42 in the chassis sections 2,4. Specifically, the transverse profile has a lowered central portion 55 flanked by adjacent portions 56 that taper upwards to the level of a lower lip 57 of the bogie section longitudinal frame members 48,49.

The laterally inwardly directed C-form of the longitudinal frame members 48,49 is wider than the laterally outwardly directed C-form of the chassis longitudinal members 20,21;22,23, so that the bogie longitudinal members 48,49 cup a lower lip 49 of the chassis beams.

The arrangement is such that the rearwards and forwards pairs 20,21;22,23 of longitudinal frame members are longitudinally aligned when the chassis sections 2,4 are joined together. This permits the movable bogie section 6 to slide between the chassis sections on rollers (not shown) mounted in housings on the chassis longitudinal frame members.

The movable bogie section 6 is initially secured to the forwards chassis section 4 by means of a securing mechanism between the bogie section and the forwards chassis section. The securing mechanism comprises a front pin 50 that extends downwards from a transverse frame member 59 in the forwards chassis section, and a forwards facing clasp mechanism 52 in the movable bogie section 6. When the clasp 52 is released, the downward pin 50 is free to leave the clasp as the vehicle 1 is moved in a forwards direction. To facilitate this, a control system is provided which brakes the movable bogie wheels 11, but not the fixed bogie wheels 10 as the vehicle is pulled forwards. This causes the movable bogie section 6 to slide rearwards until the rear pin 36 in the rearwards chassis section 2 enters a rear facing clasp 53 in the movable bogie section 6. As can be seen from the drawings, the bogie clasps 52,53 are similar but oppositely directed. Both clasps 52,53 lie in the same plane below the level of the axial engagement mechanism 26,27,32,42, and are centered on the longitudinal axes 30,31 of the rearwards and forwards chassis sections 2,4.

The brakes the then released on the movable bogie section wheels 11 and the vehicle may then move off.

The central axial arrangement of the components 50,52;36,53 of the securing mechanism in the rearwards and forwards chassis sections 2,4 and in the bogie section 6 helps to balance forces on the components both during locking and unlocking of the bogie section to the chassis sections 2,4 and also during operation on the road of the vehicle 1. The securing mechanism is therefore referred to herein as an axial securing mechanism.

When the rearwards chassis section 2 is to be left behind, for example for unloading at a depot, then the axial engagement mechanism 26,27,32,42 is disengaged to allow the chassis sections 2,4 to be separated. Prior to this, the bogie section 6 is released from the rearwards chassis section 2 and moved to be beneath the forwards chassis section 4. In doing so the axial securing mechanism 36,53 between the rearwards chassis section 2 and the movable bogie section 6 is first released to allow the portion of the securing mechanism 52,53 in the bogie section to move with clearance underneath the axial engagement mechanism 26,27,32,42.

To facilitate the relative movement of the movable bogie section 6 and the chassis sections 2,4, the brakes are again applied to the movable bogie section wheels 11, but not the fixed bogie section wheels 10. The vehicle 1 moves backwards and the front pin 50 enters the front facing clasp 52. The pin 50 is automatically captured by the clasp 52, and an automatic control system releases the brakes on the movable bogie wheels 11.

An operator would then lower the front and rear supports 12, 14 in the rearwards chassis section 2, prior to disengaging the engagement means 26,27,32,42, again under the control of an automatic control system.

Although not shown in the drawings, the front pair of supports 12 in the rearwards chassis section needs to be movable out of the way of the sliding bogie section 6. This may be done either by providing a slider mechanism for the supports 12 on a laterally outwards surface of the longitudinal frame members (as will be described for the second embodiment below), or by making the supports removable.

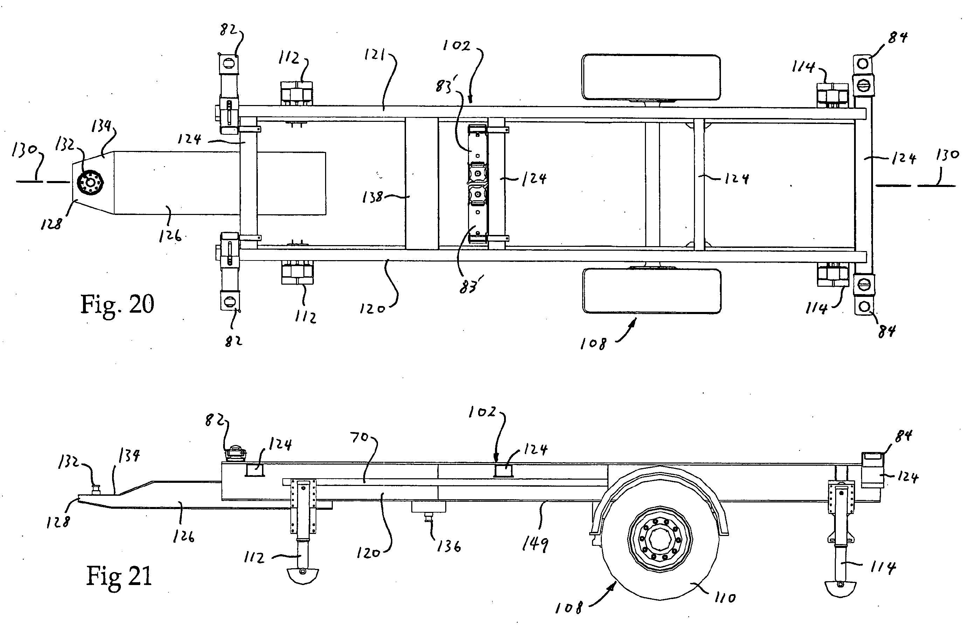

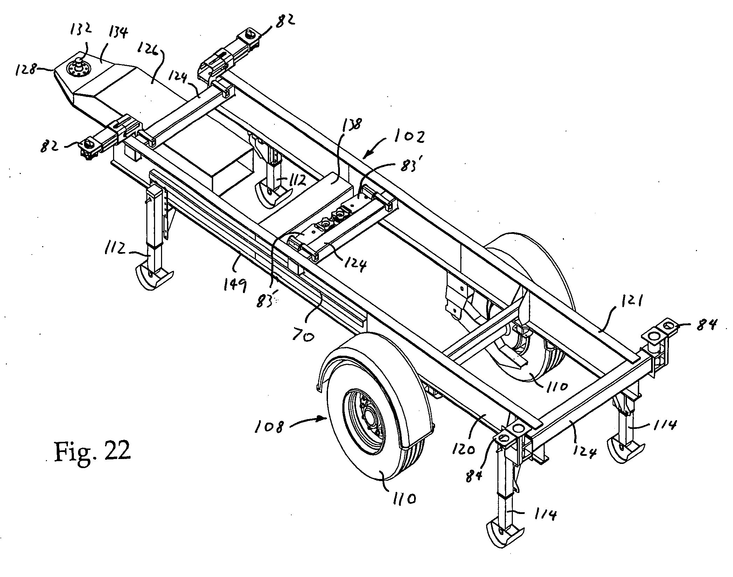

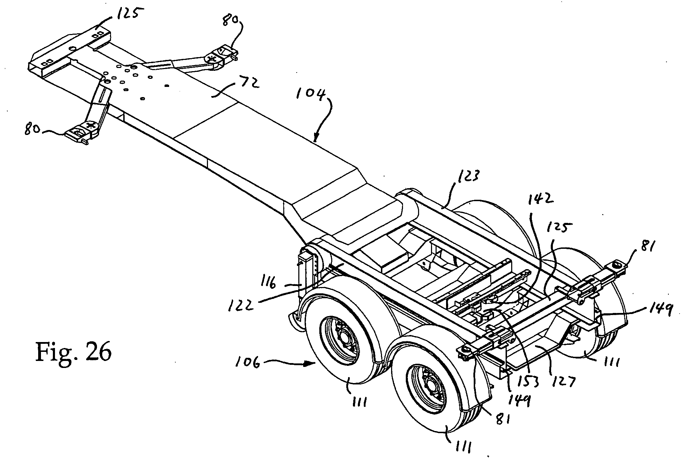

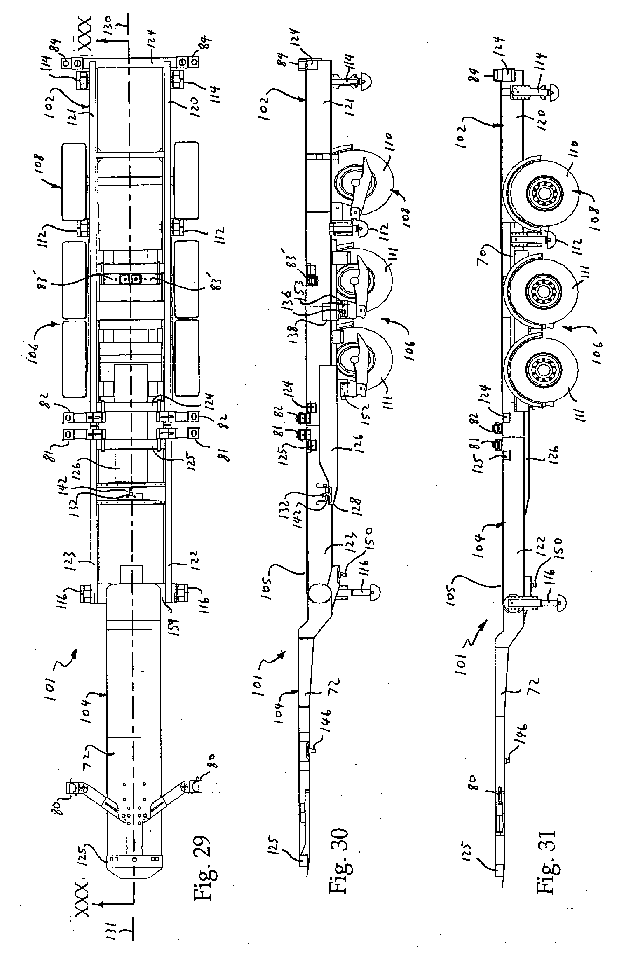

A second embodiment of a split-chassis load carrying vehicle 101 is illustrated in Figures 20 to 33. Features in the second embodiment 101 that correspond with features in the first embodiment 1 are indicated by reference numerals incremented by 100.

The split-chassis load carrying vehicle 101 of the second embodiment differs from that of the first embodiment 1 essentially in that the vehicle is a skeletal trailer for carrying containerised loads. The axial securing mechanism 136,153;150,152 and the axial engagement mechanism 126,127,132,142 work in exactly the same way as described above.

The split-chassis skeletal trailer 101 also differs in that the a slider mechanism 70 is provided by which the front drop-down supports 112 may be slid backwards towards the fixed bogie 108 when the movable bogie section 106 is moved back to be beneath the rearwards chassis section 102.

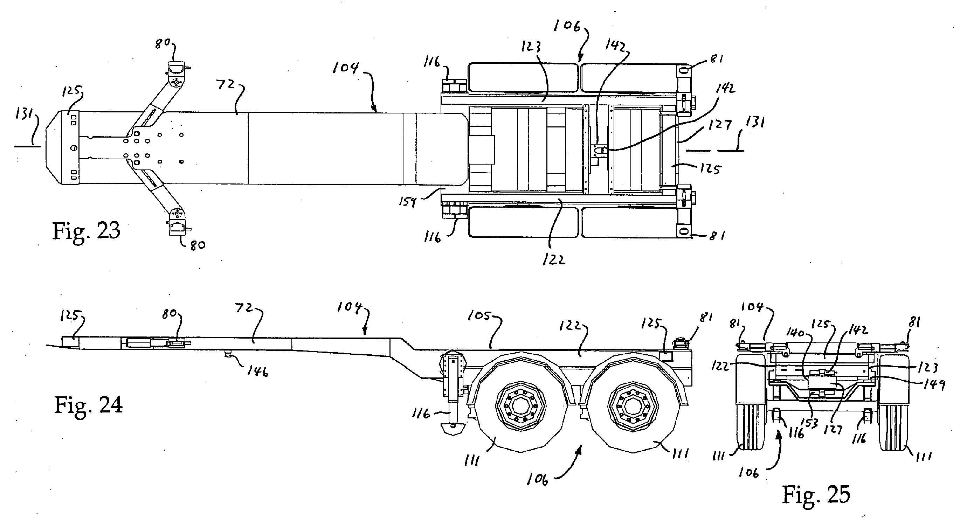

The skeletal trailer 101 is of the "Goose Neck" type with, as shown most clearly in Figures 25, 30 and 31, the longitudinal frame members 122,123 having a load bearing upper surface 105 set 160 mm below the level of a load bearing "Goose Neck" box-section chassis member 72 that extends forwards of the main longitudinal frame members 122,123.

Each of pair of chassis members 120,121;122,123 in the rearwards and forwards chassis sections 102,104 are spaced apart by several transverse load bearing tie beams 124,125,138 which provide support for nearby or adjacent corresponding pairs of container twist lock mounts 80,81,82,83',84 for connecting to various ISO standard containers.

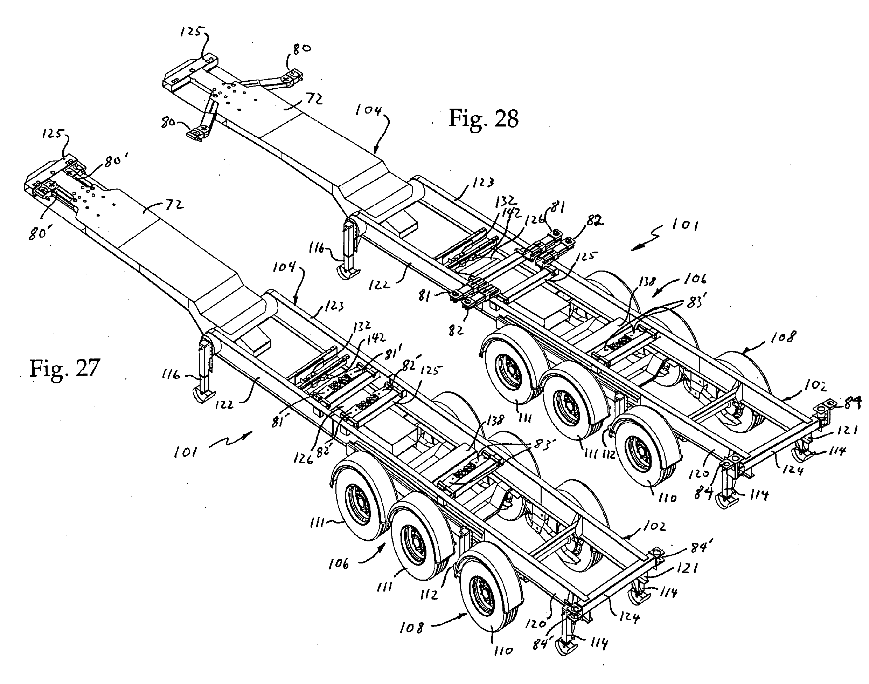

Each one of the pairs of mounts 80,81,82,83',84 may be moved between a retracted orientation, as indicated by primed reference numerals 80',81',82',83' as shown in Figure 27 to a laterally extended orientation, as indicated by unprimed reference numerals 80,81,82,84 as shown in Figure 28.

The operation and use of such retractable mounts in a "Goose Neck" skeletal trailer is discussed in patent document WO 03/011636 A1. This disclosure explains how such container mounts may be retracted or extended as required in order to load a variety of container configurations onto a skeletal trailer. The arrangement of the axial engagement mechanism and the axial securing mechanism of the present invention is compatible with the low vertical height afforded by such a "Goose Neck" trailer, with the result that the skeletal trailer 101 is capable of carrying "High Cube" containers on continental European roads with the standard super single 385 x 65 x R22.5 tyre size.

Furthermore, because the invention employs a movable bogie section 106, thus saving on unloaded weight, the skeletal "Goose Neck" trailer 101 is capable of carrying "Heavy" type containers and fully loaded 13.6 m (45 feet) containers on United Kingdom roads.

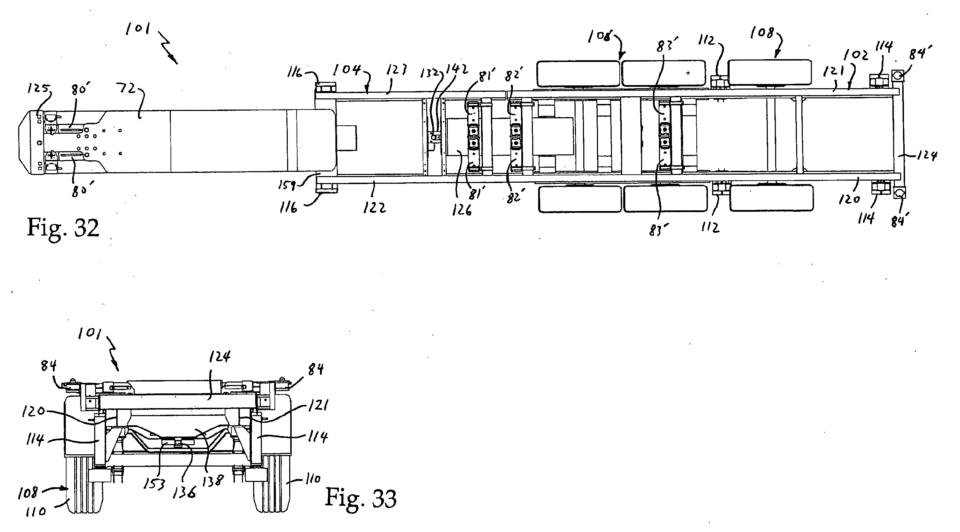

Both the first and second embodiments 1,101 of the invention provide a low-height for a loading surface, either a flatbed surface 3,5 or containerised mounted points 80-84. As can be seen most clearly from Figures 25 and 33 the arrangement of the axial securing mechanism and the axial engagement mechanism provides significant benefits, as the clasps 52,53;152,153 in the moving bogie section 6;106 have a lower profile than the stationary downwardly extending pins 36,50;136,150 in either of the chassis sections 2,4;102;104. Because the low profile components (i.e. the clasps) are provided in the moving bogie section, more vertical clearance is provided where the moving bogie section and the engagement mechanism cross over. This in turn helps to keep the overall height of the vehicle down, and permits the vehicle to carry higher loads or taller containers than would otherwise be the case.

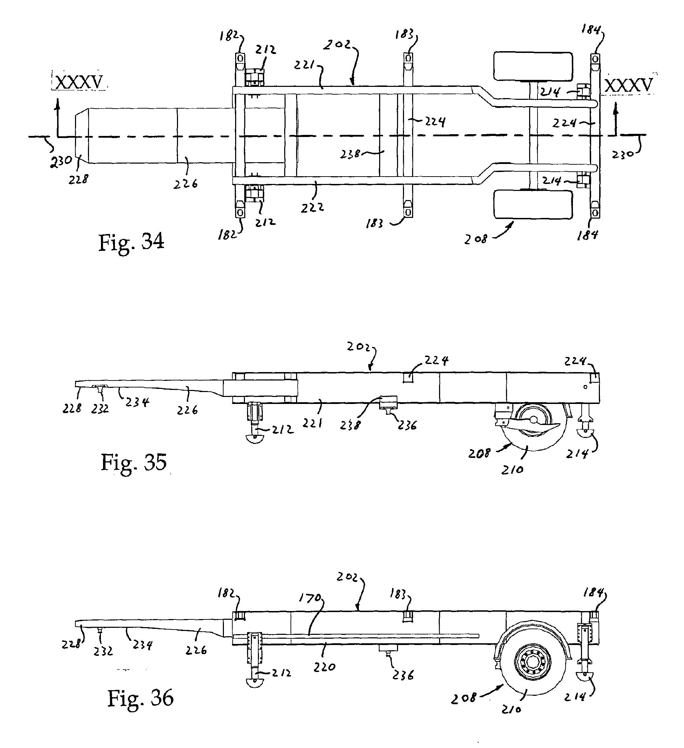

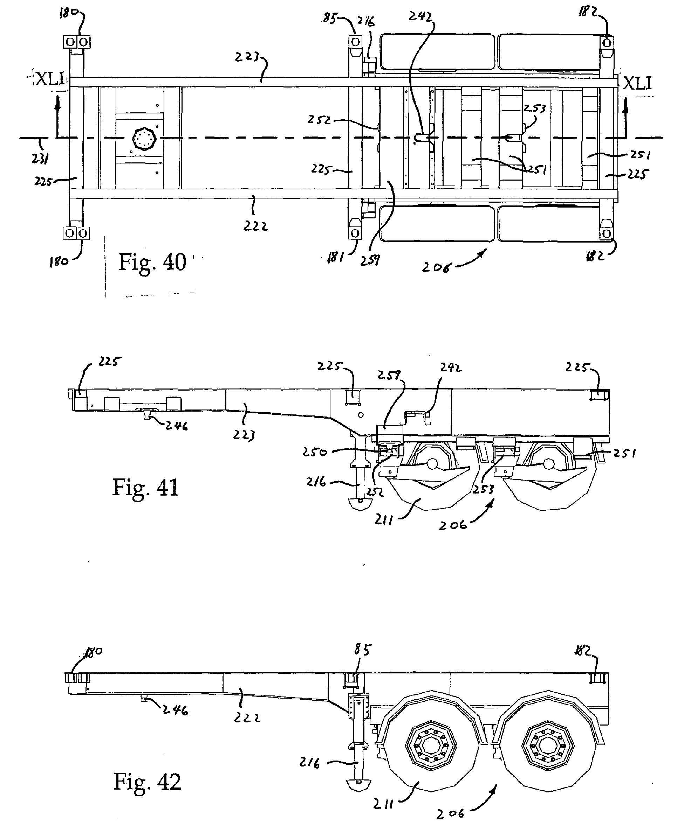

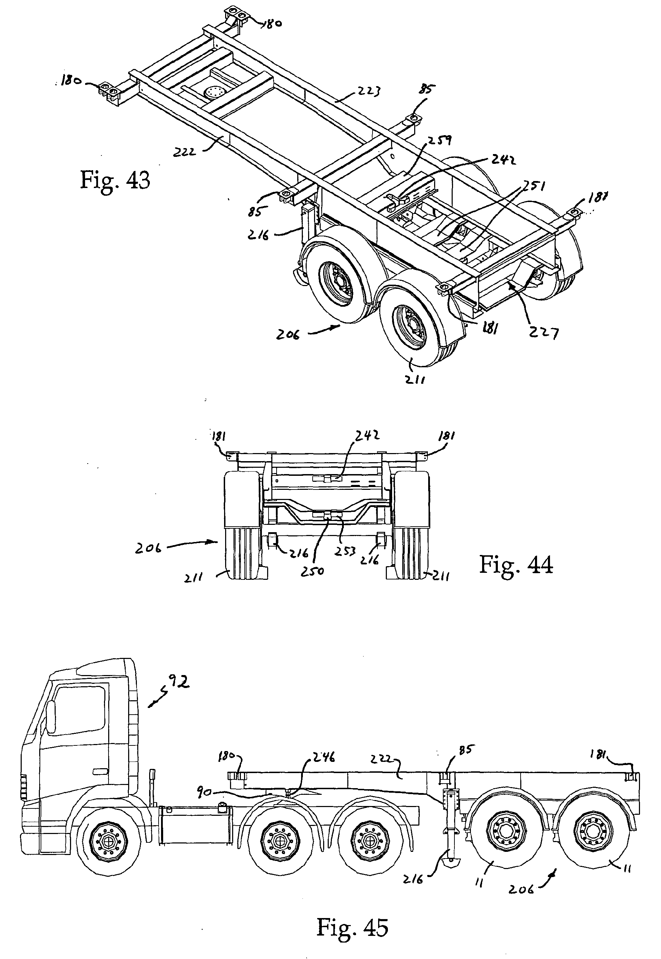

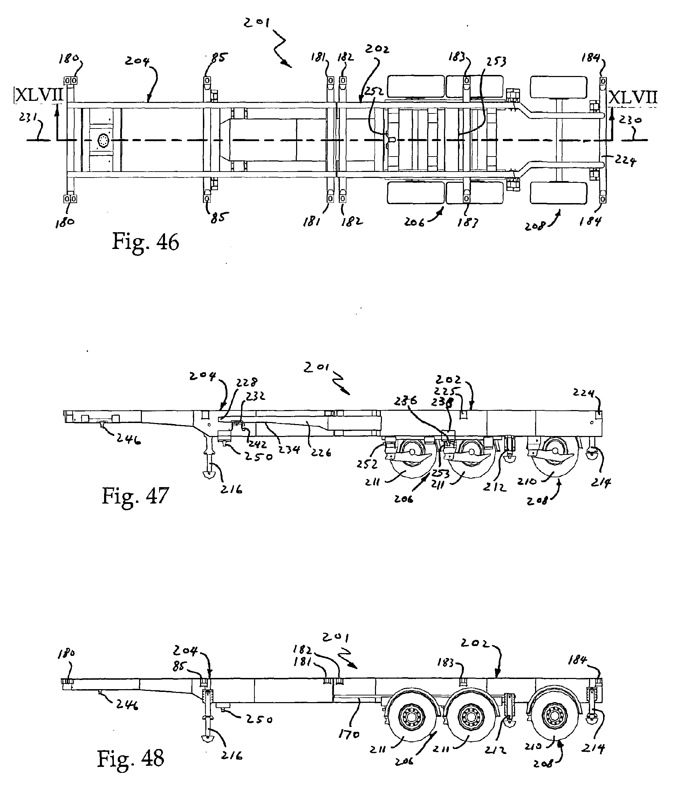

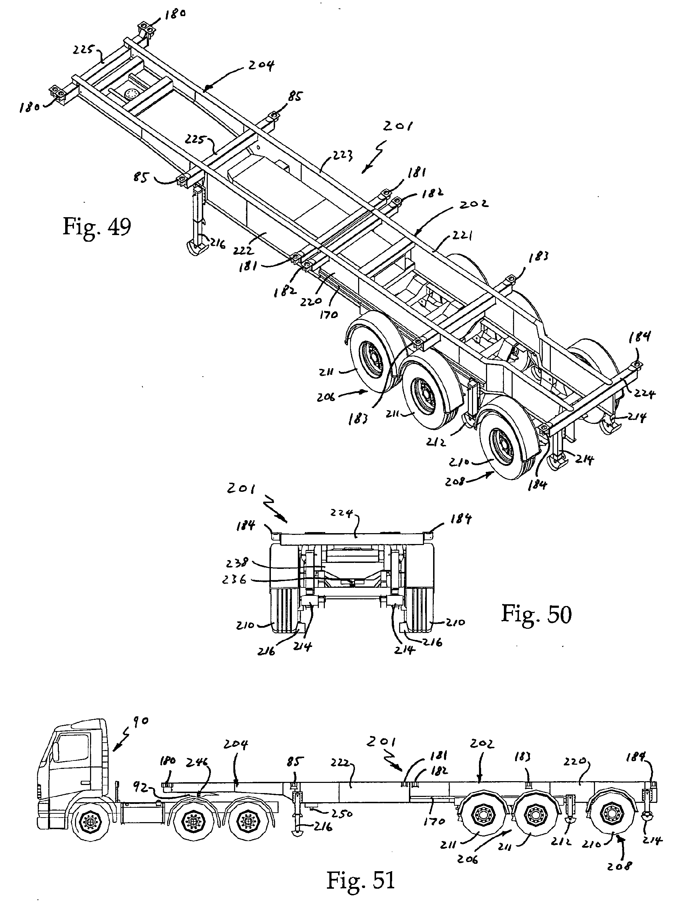

A third embodiment of a split-chassis load carrying vehicle 201 is illustrated in Figures 34 to 51. Features in the third embodiment 201 that correspond with features in the second embodiment 1 are indicated by reference numerals incremented by 100.

The split-chassis load carrying vehicle 201 of the third embodiment differs from that of the second embodiment 101 in that the vehicle is a skeletal trailer having fixed container mounting points 85,180,181,102,183,184 extending outwards from parallel longitudinal frame members 220,221,222,223.

Another difference lies in the fact that the longitudinal frame members are not of the "Goose Neck" type, but have a flat upper surface. This skeletal trailer 201 is therefore not suitable of carrying "High Cube" type containers on Continental European roads. The trailer can, however, carry all formats of ISO container on UK roads.

The axial securing mechanism 236,253;250,252 and the axial engagement mechanism 226,227,232,242 of the third embodiment 201 work in essentially the same way as described above for the first and second embodiments 1,101. A significant difference, however, lies in the fact the rearwards chassis section 202 has a longer forwards projection 226 with a king pin 232 that extends downwards from a lower surface 234 of the projection 226 near the forwards tip 228 of the projection 226. The king pin 232 is identical with the upwardly extending pins 26,126 of the first and second embodiments 1,101, and engages with the same type of clasp mechanism 242 in the forwards chassis section 204 when the chassis sections 202,204 are joined together. Compared with the first and second embodiments 1,101, the clasp mechanism 242 of the third embodiment 201 is inverted and positioned further forwards in the forwards chassis section.

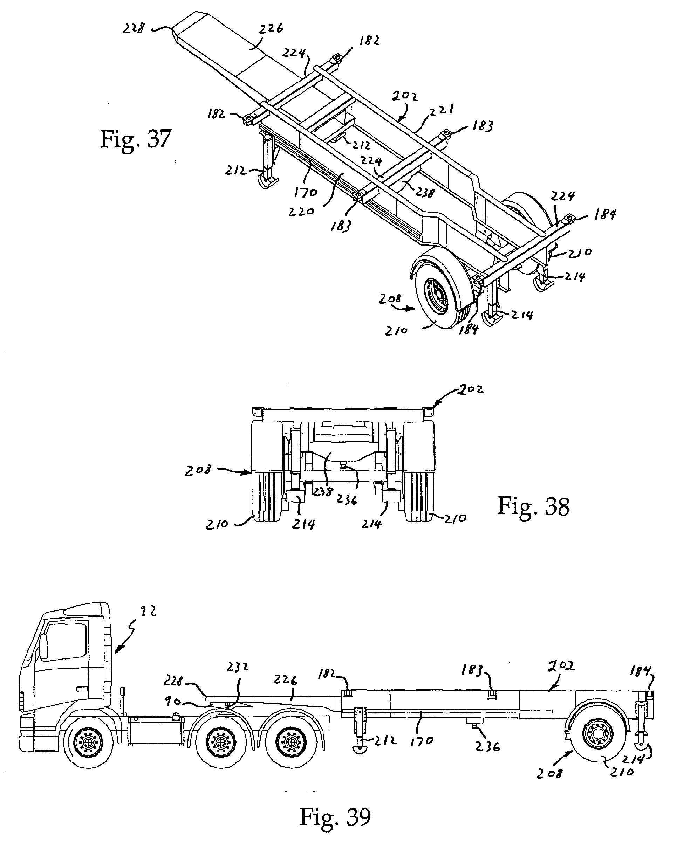

As shown in Figure 39, the king pin 232 and forwards projection 226 of the rearwards chassis section 202 are suitable for connection to a conventional fifth-wheel 90 of a tractor unit 92. The rearwards section 202 may therefore be used to transport goods either as a rearwards section of a split-chassis vehicle 201, or independently of the forwards chassis section 204.

It should be noted that the split-chassis load carrying vehicle of the second and third embodiments 101,201 each differ from that of the first embodiment 1 essentially in that the vehicles 101,201 are skeletal trailers for carrying containerised loads. The axial securing mechanisms 136,153,150,152;236,253,250,252 and the axial engagement mechanisms 126,127,132,142;226,227,232,242 for the second and third embodiments 101,201 work in the same way as those for the first embodiment 1 described above.

It is also a particular benefit of the invention that the rearward chassis section 2;102;202 contains only one pin 32;132;232 as the rearwards portion of the engagement mechanism, and one downwardly extending pin 36;136,236 in the rearwards portion of the securing mechanism. Such pins are relatively simple mechanically as compared with the clasp mechanisms 42,52,53;152,153,142;242,252,253, and are hence much cheaper to manufacture and require essentially no maintenance in use.

Similarly, the vehicles 1;101;201 according to the invention may have one relatively inexpensive rear fixed bogie section 8;108;208. Optionally, for the first and second embodiments 1;101, the rearwards chassis section 2;102 may have no bogie section at all and use only the shared movable bogie section 6;106. These possibilities allow a significant weight savings and cost savings.

It therefore is envisaged that an owner of the split-chassis vehicle 1;101;201 may purchase several of the rearward chassis sections 2;102;202 for each forwards chassis section 4;104;204. Rearward chassis sections may then be left at depots or at delivery/collection destinations for loading and unloading while the forwards chassis section is taken elsewhere by a tractor unit. In the case of the third embodiment 201, after splitting of the forwards and rearwards chassis sections 202,204, a second tractor unit 92 may be used to transport the rearwards chassis section 202 to a different final destination from that of the forwards chassis section 204.

It is therefore very helpful for all embodiments 1;101;201 that the rearward chassis section 2;102;202 is kept as inexpensive and mechanically simple as possible.

It should be noted that either of the first or second embodiments 1,101 could be modified to have the downwardly extending king pin 246 and inverted clasp 242 of the third embodiment 201 so that the rearwards chassis section 2,102 of these embodiments could be attached to a tractor unit 90.

It should be also noted that the invention is not limited to trailers having a forwards section that may be removably joined with a tractor unit to form a vehicle with an articulated trailer. For example, the invention is equally applicable to a vehicle that has a forwards chassis section that is permanently affixed to or part of a motive unit, as long as the rearwards chassis section can be removably joined to the forwards chassis section as described above for any of the three embodiments of the invention.

Although the first and second embodiments 1,101 of the invention have been illustrated as having both a movable bogie section and a fixed bogie section in the rearwards chassis section, it may be desirable to dispense with the fixed bogie section, in which case the rearwards bogie section would be supported only by drop-down supports when separated from the forwards bogie section. This would permit the manufacture of a very inexpensive rearwards chassis section, thereby making it very economical to have a large number of such rearwards chassis sections for every forwards chassis section.

Modifications may be incorporated without departing from the scope of the present invention as claimed. For example, although the invention has been described with reference to a flatbed trailer and a skeletal trailer, the invention may also be useful for curtain sided trailers or box vans.

## Claims

1. A split-chassis load carrying vehicle, comprising a forwards chassis section, a rearwards chassis section, said chassis sections extending along a longitudinal axis of the vehicle, and a bogie section having road-running gear including a set of road-going wheels, wherein:
- the bogie section is relatively movable with respect to the forwards and rearwards chassis sections between a forwards position beneath the forwards chassis section and a rearwards location beneath the rearwards chassis section at which positions the bogie section may be secured to either the forwards chassis section or the rearwards chassis section by means of a securing mechanism;
- the forwards chassis section and the rearwards chassis section are releaseably joined to each other to form the vehicle by means of an axial engagement mechanism which when disengaged allows said chassis sections to be separated;
- the forwards chassis section and the rearwards chassis section each have pair longitudinal frame members that extend on opposite sides of the longitudinal axis of the vehicle, said frame members being longitudinally aligned in pairs on opposite sides of said longitudinal axis of the vehicle when the forwards and rearwards chassis sections are joined to each other;
**characterised in that**
- the securing mechanism is an axial securing mechanism, said securing mechanism lying entirely below the level of the longitudinal frame members of both the forwards chassis section and the rearwards chassis section, the arrangement being such that when the bogie section is moved between the forwards and rearwards positions a portion of the securing mechanism in the bogie section moves beneath the engagement mechanism.

2. A vehicle as claimed in Claim 1, in which the engagement mechanism comprises an axially extending projection on one chassis section that engages with a complementary feature on the other chassis section as the two sections are brought together to be joined, said axially extending projection lying partially beneath the level of the longitudinal frame members of both the forwards chassis section and the rearwards chassis section.

3. A vehicle as claimed in Claim 1 or Claim 2, in which the bogie section has a pair of longitudinal frame members, said frame members being longitudinally aligned on opposite sides of a longitudinal axis of the section to which the bogie section is secured, said securing mechanism lying entirely below the level of the longitudinal frame members of the bogie section.

4. A vehicle as claimed in any preceding claim, in which the engagement mechanism comprises an axially extending projection that projects forwards from the rearwards chassis section and that engages with a complementary feature on the forwards chassis section as the two sections are brought together to be joined and the projection has a downwardly extending king pin for engagement with a fifth-wheel coupling mechanism of a tractor unit when the forwards section is not joined to the rearwards section.

5. A split-chassis load carrying vehicle, comprising a forwards chassis section, a rearwards chassis section, said chassis sections extending along a longitudinal axis of the vehicle, and a bogie section having road-running gear including a set of road-going wheels, wherein:
- the bogie section is relatively movable with respect to the forwards and rearwards chassis sections between a forwards position beneath the forwards chassis section and a rearwards location beneath the rearwards chassis section at which positions the bogie section may be secured to either the forwards chassis section or the rearwards chassis section by means of an axial securing mechanism;
- the forwards chassis section and the rearwards chassis section are releaseably joined to each other to form the vehicle by means of an axial engagement mechanism which when disengaged allows said chassis sections to be separated;
- the axial engagement mechanism comprises an axially extending projection that projects forwards from the rearwards chassis section and that engages with a complementary feature on the forwards chassis section as the two sections are brought together to be joined;
**characterised in that**
- the projection has a downwardly extending king pin for engagement with a fifth-wheel coupling mechanism of a tractor unit when the forwards section is not joined to the rearwards section.

6. A vehicle as claimed in Claim 4 or Claim 5, in which said king pin is also part of the engagement mechanism which joins the forwards and rearwards chassis sections together.

7. A vehicle as claimed in any preceding claim, in which the securing mechanism comprises a clasp mechanism in the bogie section that engages with a downwardly extending pin in the forwards chassis section and/or the rearwards chassis section as the bogie section is secured to the respective chassis section.

8. A vehicle as claimed in any of Claim 1 to 6, in which the securing mechanism comprises a pair of clasps on the bogie section and a pair of downwardly extending pins, one of said pins being on the forwards chassis section and the other of said pins being on the rearwards chassis section, the arrangement being such that as the bogie section moves between said chassis sections one of the pins is released by and moves away from one of said clasps and the other of said pins moves towards and enters the other of said clasps.

9. A vehicle as claimed in Claim 8, in which said pair of clasps each has an entrance for receiving said respective pin, said entrances facing in opposite longitudinal directions.

10. A vehicle as claimed in any preceding claim, in which the securing mechanism and the engagement mechanism each comprise at least one pin on one of said sections and at least corresponding one clasp on the other of said sections for receiving said pin, said at least one clasp being provided on the bogie section and/or the forwards chassis section and the rearwards chassis section not having any such clasp(s) when said chassis sections are separated with the bogie section having been moved beneath the forwards chassis section.

11. A vehicle as claimed in any preceding claim, in which the engagement mechanism extends downwardly beneath a load carrying level of the vehicle into a space between the aligned longitudinal frame members, and the bogie section has one or more transverse frame members that extend between said longitudinal frame members, said transverse frame members being configured with a lowered profile in a central portion of the transverse member(s) as compared with laterally adjacent portions so as to allow passage of the bogie section beneath the downwardly extending engagement mechanism, said securing mechanism lying at or below the level of the central portion of the transverse member(s).

12. A vehicle as claimed in any preceding claim, in which the bogie section partially overlaps in a longitudinal direction both the forwards section and the rearwards section when sections are joined together and when the bogie section is secured to the rearwards section.

13. A vehicle as claimed in any preceding claim, in which the vehicle comprises an automatic control system for controlling the separation and joining of the forwards and rearwards chassis section which, when the rearwards chassis section is to be separated from the forwards chassis section, the control system being arranged to:
a) apply a brake to the wheels of the bogie section;
b) release the securing mechanism to disengage the bogie section from the rearwards chassis section;
c) permit the vehicle to move in a reverse direction with the bogie section remaining stationary until the securing mechanism engages with the forwards chassis section; and
d) release the engagement mechanism after the bogie section has been supported by drop down legs on the bogie section.

14. A motive vehicle for carrying a load, comprising a tractor unit in combination with a split-chassis load carrying vehicle, said split-chassis load carrying vehicle being as claimed in any preceding claim.

15. A rearwards chassis section for connection to a forwards chassis section to form a split-chassis vehicle, said rearwards chassis section extending along a longitudinal axis and comprising:
- a portion of a securing mechanism for securing a bogie section to the rearwards chassis section, the rearwards chassis section comprising additionally means by which a bogie section may move forwards of said securing mechanism when the bogie section is to be moved from the rearwards chassis section to a forwards chassis section joined to the rearwards chassis section;
- a portion of an axial engaging mechanism by which the rearwards chassis section may be releaseably engaged with a forwards chassis section to form the split-chassis vehicle;
- the rearwards chassis section has a pair of longitudinal frame members that extend on opposite sides of the longitudinal axis of the rearwards chassis section;
**characterised in that**
- said portion of the securing mechanism is an axial mechanism, said portion of the securing mechanism lying entirely below both the level of the longitudinal frame members of the rearwards chassis section and below the level of said portion of the engaging mechanism.

16. A forwards chassis section for connection to a rearwards chassis section to form a split-chassis vehicle, said forwards chassis section extending along a longitudinal axis and comprising:
- a bogie section having road-running gear including a set of road-going wheels, the bogie section being engaged to the forwards chassis section by means of a securing mechanism;
- a portion of an axial engaging mechanism by which the forwards chassis section may be releaseably engaged with a rearwards chassis section to form the split-chassis vehicle; wherein
- the bogie section is movable in a longitudinal direction with respect to the forwards chassis section towards a rearwards chassis section when the securing mechanism is released;
- the forwards chassis section has a pair of longitudinal frame members that extend on opposite sides of the longitudinal axis of the forwards chassis section;
**characterised in that**
- said portion of the securing mechanism is an axial mechanism, said portion of the securing mechanism lying entirely below both the level of the longitudinal frame members of the forwards chassis section and below the level of said portion of the engaging mechanism.
